# EUROPEAN PATENT SPECIFICATION

(11) **EP 2 853 104 B1**
(45) Date of publication and mention of the grant of the patent: **10.01.2018**
(21) Application number: 12729014.6
(22) Date of filing: 23.05.2012
(51) Int. Cl.: H04W 48/16, H04W 84/18

(54) **METHOD AND SYSTEM FOR SUPPORTING THE DISCOVERY OF SYNCHRONIZED CLUSTERS OF MOBILE STATIONS IN A WIRELESS COMMUNICATION NETWORK**
VERFAHREN UND SYSTEM ZUR UNTERSTÜTZUNG DER ERKENNUNG SYNCHRONISIERTER CLUSTER VON MOBILSTATIONEN IN EINEM DRAHTLOSEN KOMMUNIKATIONSNETZWERK
PROCÉDÉ ET SYSTÈME POUR LA PRISE EN CHARGE DE LA RECHERCHE DE GRAPPES SYNCHRONISÉES DE STATIONS MOBILES DANS UN RÉSEAU DE COMMUNICATION SANS FIL

(43) Date of publication of application: 01.04.2015
(73) Proprietor: NEC Corporation, Tokyo 108-8001 (JP)
(72) Inventor: CAMPS MUR, Daniel, 64283 Darmstadt (DE)
(74) Representative: Patent- und Rechtsanwälte Ullrich & Naumann
(86) International application number: PCT/EP2012/059620
(87) International publication number: WO 2013/174428

(56) References cited:
- EP-A2- 1 936 886
- WO-A2-2011/078948
- US-A1- 2007 286 136
- US-A1- 2009 010 231
- US-A1- 2011 026 504
- IEEE: "IEEE Standard for Information Technology--Telecommunications and information exchange between systems--Local and metropolitan area networks--Specific requirements Part 11: Wireless LAN Medium Access Control (MAC) and Physical Layer (PHY) specifications Amendment 7: Extensions to Direct-Link Setup (D", IEEE STANDARD, IEEE, PISCATAWAY, NJ, USA , 14 October 2010 (2010-10-14), pages I-XII,1, XP002617166, DOI: 10.1109/IEEESTD.2010.5605400 ISBN: 978-0-7381-6499-1 Retrieved from the Internet: URL:http://ieeexplore.ieee.org/xpls/abs_al l.jsp?arnumber=5605400&tag=1 [retrieved on 2011-01-17]

## Description

The present invention relates to a method for supporting the discovery of synchronized clusters of mobile stations in a wireless communication network, wherein a synchronized cluster includes a number of mobile stations that periodically wake up according to a common duty cycle.

Furthermore, the present invention relates to a system for supporting the discovery of synchronized clusters of mobile stations in a wireless communication network, comprising synchronized clusters including a number of mobile stations that periodically wake up according to a common duty cycle, and an independent Wi-Fi infrastructure including a plurality of Wi-Fi access points transmitting beacon frames on a regular basis, which said mobile stations (3) are able to hear without being connected to said Wi-Fi access points (2).

Nowadays, wireless communication is in place almost everywhere. Depending on the specific wireless technology being deployed, the wireless communication networks provide a respective infrastructure that typically includes a plurality of geographically distributed access points. Generally, the entire communication among mobile stations is carried out via these access points. However, there is a growing trend of "socializing" mobile wireless communication in a sense that mobile devices are enabled to discover each other and to communicate with each other directly.

For instance, in the Wi-Fi Alliance a new technology is currently being discussed that is called "Neighbor Aware Networking Wi-Fi" or "Social Wi-Fi". The purpose of this technology is to allow any device with a Wi-Fi interface to discover information about its surroundings, thus enabling applications like Proximate Internet, as described in the document "Future of Wireless? The Proximate Internet", http://www.cedt.iisc.ernet.in/people/kuri/Comsnets/ Keynotes/Keynote-Rajiv-Laroia.pdf.

The Social Wi-Fi technology will have the following characteristics:
1. It will operate in unlicensed spectrum like traditional Wi-Fi.
2. It will require only a firmware update to current Wi-Fi radios (no hardware changes).
3. It will enable devices to discover information advertised by its neighbor devices in the background, and with a very low impact on battery duration. Some early estimates talk about 100 hours of battery duration under Social Wi-Fi. In this regard it is to be noticed that a traditional Wi-Fi radio always powered on may yield only 5 hours of battery duration in current smartphones (as described in O.R. Helgason, E.A. Yavuz, S.T. Kouyoumdjieva, L. Pajevic, and G. Karlsson, "A mobile peer-to-peer system for opportunistic content-centric networking", in Proceedings of the second ACM SIGCOMM workshop on Networking, systems, and applications on mobile handhelds (MobiHeld '10), ACM, New York, NY, USA, 21-26. 3).

For the sake of simplicity, any communication device that is equipped with a Wi-Fi interface and that uses the Social Wi-Fi technology as described above will be referred to as Social Wi-Fi device hereinafter.

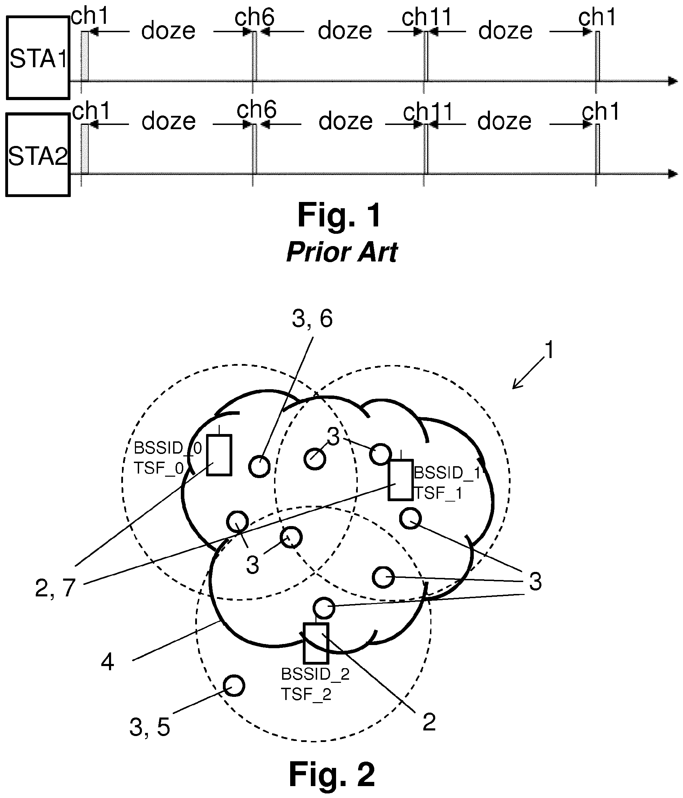

In order to allow Social Wi-Fi devices to discover information around them in a very energy efficient way, the key technical concept is ***synchronization.*** Accordingly, Social Wi-Fi devices will try to synchronize to a common duty cycle, thereby forming a cluster of devices that wake up and transmit data concurrently in a synchronous way. All Social Wi-Fi devices of a cluster will thus periodically wake up to advertise information about them. This idea is illustrated in Fig. 1 that schematically depicts two smartphones STA1 and STA2 that operate as Social Wi-Fi devices. Both devices operate in the same cluster, i.e. they wake up in a synchronous way, quickly advertise their information via a common channel (ch1, ch6, or ch11, respectively) and go back to sleep/doze mode to save power. In order to be energy efficient typical duty cycles below 5% are expected to be realized in real deployment scenarios, which may result in cluster (wake up) periods in the order of 1-10 seconds.

While energy efficiency is preserved once a Social Wi-Fi device has established an operation mode synchronized with other Social Wi-Fi devices, i.e. once it has become part of a cluster, the problem remains how a device can discover the existence of synchronized Social Wi-Fi Clusters around it in an energy efficient way.

Active scanning, where a scanning device just sends some probes to see if any cluster is there, is not feasible in this case because devices in the cluster are sleeping for most of the time and only wake up for a very small time. Therefore, a naive approach to cluster discovery would require a scanning device to stay awake for the whole cluster period until it detects a transmission that it can synchronize to. Considering then an example where a cluster period of T = 10 seconds is used, and where the cluster is allowed to operate in three different channels, this means that a scanning device can take up to 30 seconds (15 seconds on average) to discover an existing cluster, and that the radio has to be always powered on during this time. If such a scanning mode is entered often battery will quickly drain, thus defeating the whole purpose of the Social Wi-Fi technology.

It is worth noting that this problem is not only relevant when a device first powers up. Devices will move, and therefore often they will go out of range with the other devices in their synchronized cluster. Indeed, this will happen very often when the technology is first introduced and the density of devices with this technology is small. Therefore, when synchronization is lost, a device will have to rescan in order to find existent Social Wi-Fi clusters to synchronize with.

Document US 2007/286136 A1 discloses a method for energy efficient device time synchronized discovery in ad-hoc networks, wherein nodes have access to universal timing since they have access to a cellular network, or they have GPS, which require a capability that is external to the one being used to transmit service advertisements (e.g. an 802.11 or 802.15 radio).

Document US 2009/0010231 A1 discloses communications methods related to synchronization with respect to peer to peer timing structure. According to these methods, which rather consider synchronization than energy efficiency, peer to peer devices can derive a common time structure by looking at a reference time provided by an external source.

Document WO 2011/078948 A2 discloses a method and a system for discoverability of power saving P2P devices, wherein the disclosed mechanisms allow a device operating in a Find phase to discover a P2P Group Owner or a P2P Client that operate in a discoverable mode, consisting of alternating time periods in an active state and time periods in a sleep state. The searching device operates in a Find state, whereby it remains awake and alternates among all the possible channels where a P2P network might be operating, while transmitting a Probe Request message and waiting for some time for a Probe Response in each of these channels.

Generally, the document Anonymous: "IEEE Standard for Information Technology - Telecommunications and information exchange between systems - Local and metropolitan area networks - Specific requirements; Part 11: Wireless LAN Medium Access Control (MAC) and Physical Layer (PHY) specifications; Amendment 7: Extensions to Direct-Link Setup (DLS), IEEE Standard, IEEE, Piscataway, NJ, USA, 14 October 2010, which comprises the IEEE 802.11 standard, discloses two modes of operation: The infrastructure mode where a station connects to a powered Access Point, and the ad-hoc mode where stations can directly connect to each other.

It is an object of the present invention to improve and further develop a method for supporting the discovery of synchronized clusters of mobile stations in a wireless communication network and a wireless communication network of the initially described type in such a way that, by employing mechanisms that are readily to implement, mobile stations are enabled to discover the existence of a synchronous cluster in an energy efficient way.

In accordance with the invention, the aforementioned object is accomplished by a method comprising the features of claim 1. According to this claim such a method is characterized in that at least one mobile station of a synchronized cluster - announcement master - transmits advertising messages announcing the existence of said cluster to potential scanning devices that try to discover said cluster,
wherein an independent Wi-Fi infrastructure including a plurality of Wi-Fi access points transmitting beacon frames on a regular basis, which said mobile stations are able to hear without being connected to said Wi-Fi access points, is employed as external synchronization source in that said announcement master as well as potential scanning devices apply predefined rules to derive from passively observed information contained in the beacon frames transmitted unencrypted by Wi-Fi access points of said independent Wi-Fi infrastructure time slots of said advertising messages, which are used as common rendezvous points,
wherein the Timing Synchronization Function (TSF) that each Wi-Fi access point embeds into its beacon frames is used as a time coordinate system for deriving the time slots of said advertising messages, and
wherein the role of said announcement master is alternated among the mobile stations of a synchronized cluster.

Furthermore, the aforementioned object is accomplished by a system comprising the features of claim 14. According to this claim such a system is characterized in that at least one mobile station of a synchronized cluster - announcement master - is configured to transmit advertising messages announcing the existence of said cluster to potential scanning devices that try to discover said cluster,
wherein said independent infrastructure serves as external synchronization source in that said announcement master as well as potential scanning devices are configured to apply predefined rules to derive from passively observed information contained in the beacon frames transmitted unencrypted by Wi-Fi access points of said independent Wi-Fi infrastructure time slots of said advertising messages, which are used as common rendezvous points,
wherein the Timing Synchronization Function (TSF) that each Wi-Fi access point embeds into its beacon frames is used as a time coordinate system for deriving the time slots of said advertising messages, and
wherein said mobile stations are configured to alternate the role of said announcement master among the mobile stations of a synchronized cluster.

According to the invention it has been recognized that the discovery of clusters of mobile stations can be made energy efficient by using a common source of synchronization. For instance, the advertising messages could be synchronized to a common GPS clock, i.e. "meeting/rendezvous points" or a "frame structure" could be defined within the GPS timeline for existing clusters to advertise the presence. However, it has further been recognized that, e.g. by using GPS, synchronization would be achieved by means of a functionality external to the respective wireless technology deployed in the communication network. Therefore, the present invention uses, in a passive way, the signals coming from an existent (i.e. already deployed) Wi-Fi infrastructure, i.e. specifically from existing Wi-Fi access points that the mobile stations of the wireless communication network are able to hear, as common synchronization source for advertising the existence of a cluster to other stations. In this regard it is important to note that the access points do not need to be modified to support the present invention, since no (specific) information has to be explicitly included in the beacons. Instead, rendezvous points are derived from information that current access points include in their beacons for other purposes anyway.

Specifically, with respect to time, in accordance with the invention the Timing Synchronization Function (TSF) that each Wi-Fi access point embeds into its beacon frames is used as a time coordinate system for specifying the time slots for the transmission of advertising messages. The TSF value is a 64 bit timestamp that encodes time in units of 1 microsecond. Further, according to the invention the role of the announcement master is alternated among the mobile stations of a synchronized cluster. In this regard it is important to note that the announcement master in a cluster and a scanning device trying to discover that cluster might not see exactly the same Wi-Fi access points. By alternating the role of the announcement master, for instance by introducing a random delay until another mobile station is selected as announcement master, this problem can be alleviated. In addition, the proposed alternation mechanism is beneficial in terms of sharing energy consumption between mobile stations in a cluster in a fair way.

It is to be noted that the present invention is generic and can be applied to any wireless technology where devices need to discover each other. Depending on the specific wireless technology, nowadays the respective infrastructure, i.e. access points, is almost ubiquitous, for instance in case of Wi-Fi (see for reference, e.g., http://v4.jiwire.com/search-hotspot-locations.htm). This means that it is safe to assume that a Wi-Fi device will be able to see some Wi-Fi infrastructure APs operating in its surroundings (e.g. from private homes, offices, or hotspots). Generally, these Wi-Fi APs will be closed and Wi-Fi devices will thus not be able to connect to them. However, within the framework of the present invention this is not necessary, since synchronization will be achieved by observing in a passive way the beacon frames sent by infrastructure Wi-Fi APs, which are always sent in clear, i.e. unencrypted. In this regard it is important to note that implementing the present invention does not require any modifications of current infrastructure Wi-Fi APs. By making use of information derived in a passive way from existing network infrastructure, dynamic "rendezvous points" (both in frequency and time) for device discovery can be established, thereby enabling device discovery in an energy efficient way. It enables a scanning device to sleep in order to save energy and to rely on information contained in the beacon frames transmitted by access points of the independent infrastructure in order to derive time slots to wake up and receive announcements.

Although, as already mentioned above, the present invention is generic in that it can be applied in any wireless communication network, the advantages of the invention will be most prevalent in a Wi-Fi infrastructure for discovering synchronized Social Wi-Fi clusters. Here, compared to using the discovery approaches currently available in the state of the art, a much more energy efficient operation can be achieved. In this regard is important to note that energy efficiency is critical to technologies like Social Wi-Fi that target use cases requiring always on connectivity. Further, although it is expected that the Social Wi-Fi technology is progressively deployed, in an initial phase where not many devices support the technology, it will be common that devices go out of range and hence have to re-discover the presence of surrounding clusters. Therefore, an energy efficient rescan, enabled by using a method in accordance with the present invention, is essential in these cases.

According to a preferred embodiment mobile stations of the wireless communication network are provided with some a priori knowledge about the predefined rules, i.e. on how the timeslots for the transmission of the advertisement messages can be derived from the beacon frames of the infrastructure access points. For instance, in case of Social Wi-Fi such a priori knowledge could be defined by the respective standard specification.

Advantageously, the advertising messages are transmitted periodically on the basis of a predefined advertisement period. This would give scanning devices that try to discover a synchronized cluster of mobile stations in their vicinity the chance to regularly receive information about the existence of such cluster. Furthermore, mobile stations acting as announcement master as well as scanning devices, which both already know about the timeslots used for the transmission of advertising messages, can enter a sleep mode and only wake up for transmitting (in case of an announcement master) or receiving (in case of a scanning device) advertising messages at the respective timeslots. In case of realistic Social Wi-Fi scenarios the advertisement period could be in the range of seconds. In any case it will be higher than the transmission rate for beacon frames implemented at the access points, which is a typically every 100 ms.

According to an embodiment it may be provided that the announcement master periodically scans for the presence of surrounding infrastructure access points. This scanning can be done using traditional scanning methods. For instance, in case of Wi-Fi using proactive scanning discovering all access points in the 2.4 GHz band requires less than 0.5 seconds. Based on the result of the scanning process, in the next step it may be provided that the announcement master selects one or more of its surrounding infrastructure access points as its reference access points. "Reference" access point means that the announcement master will construct the advertisement process on the basis of information specific to that access point. In other words, taking advantage of the information transmitted within a reference access point's beacon frames, the announcement master derives a set of "rendezvous" points (both in frequency and in time) where it will advertise the presence of the cluster.

According to an embodiment the "rendezvous" points may be derived in the following way:
With respect to frequency it may be provided that the advertising messages are transmitted in the same channel in which a reference access point operates.

According to a preferred embodiment the time slots for transmitting advertising messages are derived as points in time at which a predefined number of the lower bits of a reference access point's TSF equals a predefined value specific to that reference access point, for instance a reference access point's Basic Service Set Identifier (BSSID). The BSSID is a MAC address that is included in every beacon frame transmitted by infrastructure access points, and it has 48 bits where the low 24 bits are essentially random.

The predefined number of the lower bits of a reference access point's TSF may be adapted to the advertisement period. For instance, assuming an advertisement period of T_adv = 1 second, one needs k = 20 bits in a beacon's TSF to represent this time interval. In such case, in order to decide exactly "when" within this interval of T_adv = 1 second the announcement master will advertise the presence of the cluster, the lower 20 bits in the BSSID can be used to derive a "time offset". Therefore, for each selected infrastructure access point, when the lower 20 bits of the access point's advertised TSF equal the lower 20 bits of the access point's BSSID, the announcement master would go to the channel of that access point and advertise in that channel the presence of the cluster.

From the perspective of a scanning device a similar procedure as described above with respect to an announcement master can be applied. A scanning device may scan once for surrounding access points and observes the TSF and the BSSID in each beacon frame. Based on a scanning device's a priori knowledge about the roots being applied for deriving advertisement slots, the scanning device can translate the collected access point information into a common "rendezvous" point in frequency and time where it will be able to discover the cluster. In a specific embodiment the scanning device will know that for each observed access point, when the lower 20 bits of the access point's TSF equal the lower 20 bits of the access point's BSSID, this is an "advertisement slot" that might be used by a cluster operating in its vicinity to advertise itself. Therefore, now the scanning device can safely sleep and only wake up at these "advertisement slots" that are defined as a function of the infrastructure access points that this device is seeing.

There are several ways how to design and further develop the teaching of the present invention in an advantageous way. To this end, it is to be referred to the patent claims subordinate to patent claims 1 and 14 on the one hand, and to the following explanation of a preferred example of an embodiment of the invention illustrated by the drawing on the other hand. In connection with the explanation of the preferred example of an embodiment of the invention by the aid of the drawing, generally preferred embodiments and further developments of the teaching will be explained. In the drawings
- Fig. 1: schematically illustrates an example of a synchronized cluster of mobile stations according to prior art,
- Fig. 2: schematically illustrates a Social Wi-Fi scenario operating in accordance with an embodiment of the present invention,
- Fig. 3: schematically illustrates an advertisement process of a cluster of mobile stations performed in accordance with an embodiment of the present invention,
- Fig. 4: schematically illustrate the results of a simulative study evaluating the performance of a method for supporting device discovery according to an embodiment of the present invention,
- Fig. 5: is a diagram illustrating the duration of scanning attempts performed by a mobile station in accordance with the present invention, and
- Fig. 6: is a diagram illustrating the energy spent by a mobile station in scanning attempts performed in accordance with the present invention.

Fig. 2 schematically illustrates an embodiment of the present invention. Although the embodiment is related to the Social Wi-Fi technology, it is once again noted that the present invention is not restricted thereto, but can be applied to any other wireless technology where devices need to discover each other.

The part of the Wi-Fi network 1 illustrated in Fig. 2 comprises a total of eight mobile stations 3 that form a Social Wi-Fi cluster 4 (indicated by the cloud surrounding the mobile stations 3). Furthermore, Fig. 2 depicts three access points APs 2, the coverage area of which is indicated by the circle surrounding each AP 2. The APs 2 are independently deployed, i.e. they are not part of the cluster network, in the sense that they do not need to be deployed by the same entity.

The Social Wi-Fi cluster 4 is synchronized with a common heartbeat, as e.g. illustrated in Fig. 1, and operates with a small duty cycle. Another mobile station 3 - scanning device 5 - is not yet part of the Social Wi-Fi cluster 4, but is scanning trying to discover it. The problem is how scanning device 5 can discover the existence of the synchronized Social Wi-Fi cluster 4 in energy efficient way, in particular in case of a rather long cluster periods of e.g. T = 10 seconds, where active scanning would be too time and energy consuming.

According to the invention it has been recognized that network entry or discovery can be made energy efficient if it is possible to use an external source of synchronization. For instance, assuming that all Social Wi-Fi devices 3 are pre-provisioned with GPS (Global Positioning System), and that GPS is always available, then Social Wi-Fi devices 3 could synchronize to the common GPS clock, and the Social Wi-Fi standard could define "meeting points" or a "frame structure" within the GPS timeline for existing clusters 4 to advertise their presence. An example would be the following:
Every T = 1 second in the GPS clock, taking as a reference an offset specified by the Social Wi-Fi standard, one device in the cluster 4 shall go to Channel 1 and transmit a frame advertising the coordinates of the cluster 4 (i.e. time and frequency where the cluster 4 operates). In such a system scanning and cluster discovery can be done in a very energy efficient way, because the scanning device 5 can safely sleep and only wake up at the points in time where it knows that a cluster, if it happens to be there, will advertise itself.

The problem in the previous approach is that synchronization is achieved by means of functionality external to Wi-Fi, e.g. GPS or pilots in a cellular system. This is not an acceptable requirement for Social Wi-Fi where the only thing one can rely on is that devices 3 have a Wi-Fi radio. Thus, relying on a technology other than Wi-Fi as an external source of synchronization is not only expensive in terms of energy, but would also limit the number of devices that can benefit from the Social Wi-Fi technology. An example of a device that only has a Wi-Fi radio and could benefit from the Social Wi-Fi technology could be sensor or M2M devices.

Therefore, according to the present invention the signals coming from existent Wi-Fi infrastructure, i.e. existing APs 2, are used as external synchronization source for Social Wi-Fi devices 3.

In the embodiment illustrated in Fig. 2, supporting device discovery takes advantage of the fact that any current Wi-Fi infrastructure AP 2 performs the following tasks:
- It transmits a beacon frame in clear, typically every 100ms, which is a much smaller period that the periods that will be used by Social Wi-Fi Clusters, which are in the order of seconds.
- Every time a beacon frame is transmitted, the AP 2 embeds a timestamp (TSF value) that is used by the devices connected to that AP 2 for synchronization purposes.

The Social Wi-Fi standard can define a period T_adv, at which one (or a subset of) device(s) 3 in the Wi-Fi cluster 4 - announcement masters - shall advertise the presence of the cluster 4 according to coordinates defined by the infrastructure APs the announcement master sees. In the embodiment illustrated in Fig. 2, it is assumed that T_adv = 1 second.

In Fig. 2, only one station 3 in the Social Wi-Fi cluster 4 acts as announcement master 6 being in charge of advertising the presence of the cluster 4. Announcement master 6 periodically scans for the presence of surrounding Wi-Fi infrastructure APs 2, and it selects a subset (or all) of the infrastructure Wi-Fi APs 2 that it sees as its reference APs, which are the ones that will be used to advertise the presence of the Social Wi-Fi cluster 4. In Fig. 2, announcement master 6 is located within the coverage area of two Wi-Fi APs 2, which are both selected as reference APs 7. From information contained in the beacon frames transmitted by these as reference APs 7, announcement master 6 derives a set of "rendezvous" points where it will advertise a presence of the cluster 4, as will be explained in detail below.

It is noted that each of the infrastructure Wi-Fi APs 2 broadcasts a beacon frame with a TSF value for synchronization. The TSF value is a 64 bit timestamp that encodes time in units of 1 us. Since in the illustrated embodiment T_adv = 1 second, one needs k = 20 bits in the beacon's TSF to represent this time interval. Then, in order to decide exactly "when" within this interval of T_adv = 1 second announcement master 6 will advertise the presence of the cluster 4, some "time offset" is specified that is known to announcement master 6 and to any potential scanning device 5. In the embodiment of Fig. 2, the lower 20 bits in the BSSID (MAC address) included in every beacon frame are used as this common offset. Therefore, for each selected infrastructure Wi-Fi AP 7, when the lower 20 bits of the AP's 7 advertised TSF equal the lower 20 bits of the AP's 7 BSSID, announcement master 6 in the Social Wi-Fi cluster 4 goes to the channel of that AP 7 and advertises in that channel the presence of the Social Wi-Fi cluster 4. During the rest of the time announcement master 6 can be sleeping in order to save energy.

From the perspective of a scanning device 5 the same procedure is applied. Scanning device 5 scans once for surrounding APs 2 and observes the TSF and the BSSID in each beacon. Then the scanning device 5 knows that for each observed AP, when the lower 20 bits of the AP's TSF equal the lower 20 bits of the AP's BSSID, this is an "advertisement slot" that might be used by a Social Wi-Fi cluster 4 operating in its vicinity to advertise itself. Therefore, now the scanning Social Wi-Fi device 5 can safely sleep and only wake up at these "advertisement slots" that are defined as a function of the infrastructure Wi-Fi APs that this device is seeing.

However, as can be seen in the embodiment of Fig. 2, it might happen that the announcement master 6 in the Social Wi-Fi cluster 4 and the scanning device 5 do not see exactly the same APs 2. The announcement master 6 is aware of the two APs 2 with BSSID_0/TSF_0 and BSSID_1/TSF_1, respectively, whereas scanning device 5 only sees the AP 2 with BSSID_2/TSF_2. Therefore, a desirable feature of this system is that the role of the stations 3 in the Social Wi-Fi cluster 4 acting as announcement masters 6 is alternated between the stations 3. In such case the scanning device 5 would have to wait until a station 3 in the Social Wi-Fi cluster 4 that is seeing the same APs as him takes the role of the announcement master 6. This will increase discovery delay, but it can be done in an energy efficient way. Indeed, latency is not critical in Social Wi-Fi, however, energy is critical.

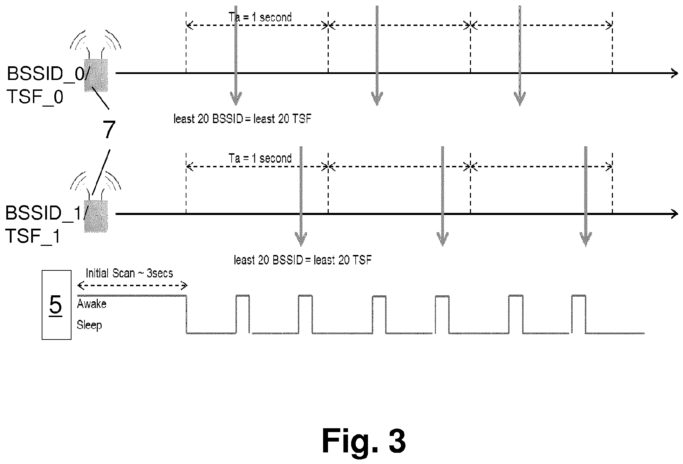

Fig. 3 illustrates how a scanning device 5 can safely sleep in order to save power and only wake up at the "advertisement slots" that are defined as a function of the infrastructure APs that it is observing. In the example of Fig. 3 it is assumed that an announcement master 6 has selected two APs as its reference APs 7, with BSSID_0/TSF_0 and BSSID_1/TSF_1, respectively. It is further assumed that scanning device 5 sees both of the reference APs 7.

For each of the discovered APs 7, the scanning device 5 stores (at least) the AP's 7 advertised TSF, the channel where the AP 7 operates, and the BSSID of the AP 7. In this regard it is important to note that it is a big advantage of the present invention that it makes use of existing deployed Wi-Fi infrastructure, but only in a passive way, i.e. it does not require connecting to the infrastructure, which would not be possible because infrastructure APs are normally secured. The required information is always transmitted in clear, and it will also be when 802.11w (protected management frames) is deployed (see for reference 802.11w, Protected Management Frames, http://www.slideshare.net/AirTightWIPS/80211w-is-ratified-so-what-does-it-mean-for-your-wlan). In addition, the proposed method also does not require transmitting any frames in the scanning device 5 which would also waste battery power.

Then a function which is known to both devices that want to discover each other is used by the devices to translate the collected per-AP information, e.g. {TSF, Channel, BSSID} into a common "rendezvous point" in time/frequency where both devices will discover each other, e.g. by employing the method described in detail in connection with Fig. 3. The discovering devices 5 can then safely sleep, and only wake up at the previously defined "rendezvous points", thus saving a significant amount of energy.

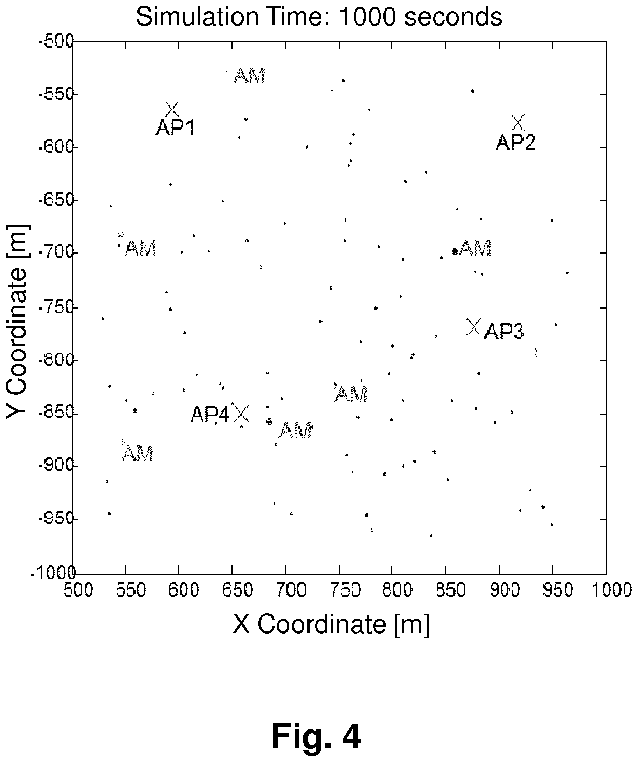

Fig. 4 illustrates the results of a simulative study that evaluates the performance of device discovery in accordance with the present invention compared to a traditional method where the scanning device is awake for the whole duration of the scanning time. The parameters used in the evaluation can be summarized as follows:
1. 100 mobile stations move freely in a 500 m² grid (a random waypoint mobility model is used).
2. There are 4 fixed infrastructure Access Points in the scenario that can be used to derive rendezvous points between scanning devices in accordance with the invention.
3. The 100 stations are synchronized to a common Social Wi-Fi cluster (or heartbeat) with a period of T = 10 seconds, and a simple algorithm is used to decide which station acts as announcement master (station 6 in Fig. 3). The algorithm consists in allocating the role of the announcement master to the device with the lowest MAC address in each neighborhood.
4. Thus, every time a device needs to perform a scanning, it first tries to do it in accordance with the present invention and if it fails, i.e. does not hear any cluster advertisement, then it does a traditional scanning where the device stays awake for T_scan = 10 seconds.

The graph depicted in Fig. 4 illustrates for a given time snapshot, the distribution of stations in the 500 m² grid, while highlighting the position of the 4 infrastructure APs with a cross, and with a thicker dot the positions of the stations acting as announcement master (AM) in the cluster. It is noted that in the illustrated scenario there are only 6 stations acting as AM thus proving that the proposed invention results in a low extra overhead for the stations that have to act as announcement masters (6 stations over 100 stations in total).

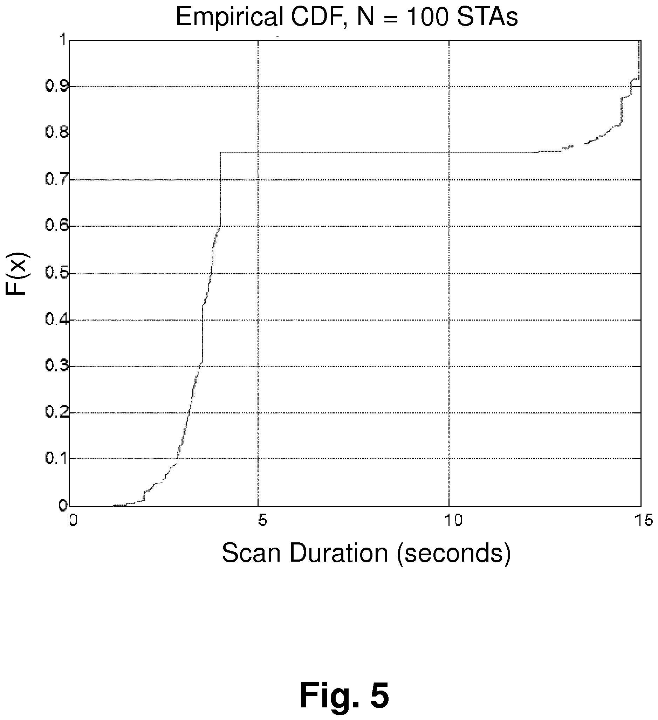

The graph depicted in Fig. 5 plots the CDF (Cumulative Distribution Function) of the durations of the scanning attempts performed by the stations in the scenario described in connection with Fig. 4:
What can be seen is that this CDF has two differentiated modes: 75% of the scanning attempts last for less than 5 seconds, and the other 25% last around 13 seconds. The first 75% correspond to the scanning attempts performed by applying a method in accordance with the present invention, where the announcement masters advertise the existence of the cluster every T_adv = 2 seconds, therefore scanning time can be substantially reduced. On the other hand when native scanning according to prior art is performed, the station needs to stay awake for a fixed time, in the simulated case for 10 seconds.

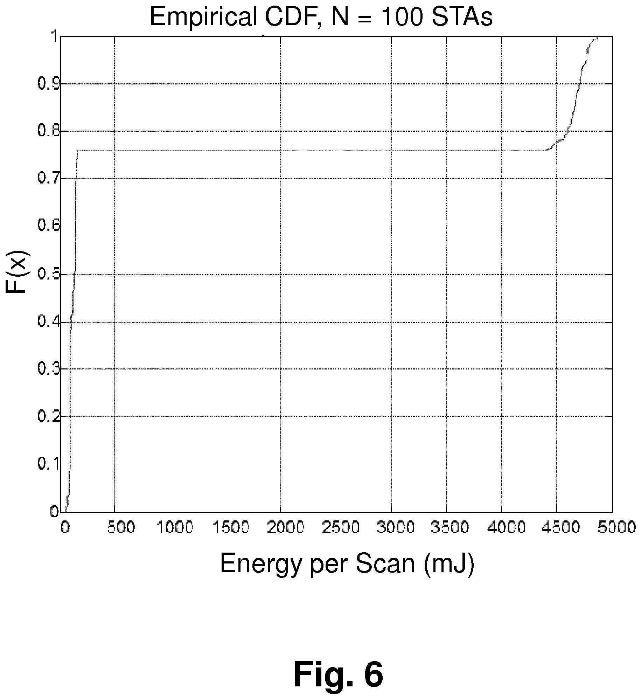

Fig. 6 illustrates the CDF of the energy spent in each of the scanning attempts:
It is to be clearly seen how the 75% of scanning attempts performed by applying a method in accordance with the present invention result in a very low energy consumption (< 250mJ), because the scanning device only wakes up at the target advertisement times defined by the infrastructure APs, while the 25% of scanning attempts performed in a traditional way incur each in an energy cost of around 4.5 Joules.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. Method for supporting the discovery of synchronized clusters (4) of mobile stations (3) in a wireless communication network (1),
wherein a synchronized cluster (4) includes a number of mobile stations (3) that periodically wake up according to a common duty cycle,
**characterized in that** at least one mobile station (3) of a synchronized cluster (4) - announcement master (6) - transmits advertising messages announcing the existence of said cluster (4) to potential scanning devices (5) that try to discover said cluster (4),
wherein an independent Wi-Fi infrastructure including a plurality of Wi-Fi access points (2) transmitting beacon frames on a regular basis, which said mobile stations (3) are able to hear without being connected to said Wi-Fi access points (2), is employed as external synchronization source **in that** said announcement master (6) as well as potential scanning devices (5) apply predefined rules to derive from passively observed information contained in the beacon frames transmitted unencrypted by Wi-Fi access points (2) of said independent Wi-Fi infrastructure time slots of said advertising messages, which are used as common rendezvous points,
wherein the Timing Synchronization Function, TSF, that each Wi-Fi access point (2) embeds into its beacon frames is used as a time coordinate system for deriving the time slots of said advertising messages, and
wherein the role of said announcement master (6) is alternated among the mobile stations (3) of a synchronized cluster (4).

2. Method according to claim 1, wherein mobile stations (3) of said wireless communication network (1) are provided with a priori knowledge about said predefined rules.

3. Method according to claim 1 or 2, wherein said advertising messages are transmitted periodically on the basis of a predefined advertisement period.

4. Method according to any of claims 1 to 3, wherein said announcement master (6) periodically scans for the presence of surrounding Wi-Fi access points (2) of said independent Wi-Fi infrastructure.

5. Method according to any of claims 1 to 4, wherein said announcement master (6) selects one or more of its surrounding Wi-Fi access points (2) as its reference Wi-Fi access points (7).

6. Method according to claim 5, wherein said advertising messages are transmitted in the same channel in which said reference Wi-Fi access point (7) operates.

7. Method according to any of claims 1 to 6, wherein the time slots of said advertising messages are derived as points in time at which a predefined number of the lower bits of a reference Wi-Fi access point's (7) TSF equals a predefined value specific to said Wi-Fi reference access point (7).

8. Method according to claim 7, wherein a reference Wi-Fi access point's (7) Basic Service Set Identifier, BSSID, that is embedded into its beacon frames is used as said predefined value specific to said reference Wi-Fi access point (7).

9. Method according to claim 7 or 8, wherein said predefined number of the lower bits of a reference Wi-Fi access point's (7) TSF is adapted to said advertisement period.

10. Method according to any of claims 1 to 9, wherein said announcement master (6) only wakes up at the time slots specified for transmitting said advertising messages and operates in a sleep mode during the rest of the time.

11. Method according to any of claims 1 to 10, wherein scanning devices (5) of said wireless communication network (1), in order to discover synchronized clusters (4) of mobile stations (3), scan for surrounding Wi-Fi access points (2).

12. Method according to any of claims 1 to 11, wherein scanning devices (5) of said wireless communication network (1) store, for each discovered Wi-Fi access point (2), at least the TSF advertised by said Wi-Fi access point (2), the channel where said Wi-Fi access point (2) operates, and said Wi-Fi access point's (2) BSSID.

13. Method according to any of claims 1 to 12, wherein scanning devices (5) of said wireless communication network (1) wake up at the time slots specified for transmitting advertising messages, which they derived from information contained in the beacon frames they receive from an Wi-Fi access point (2), and operate in a sleep mode during the rest of the time.

14. System for supporting the discovery of synchronized clusters (4) of mobile stations (3) in a wireless communication network (1), comprising
synchronized clusters (4) including a number of mobile stations (3) that periodically wake up according to a common duty cycle, and
an independent Wi-Fi infrastructure including a plurality of Wi-Fi access points (2) transmitting beacon frames on a regular basis, which said mobile stations (3) are able to hear without being connected to said Wi-Fi access points (2),
**characterized in that** at least one mobile station (3) of a synchronized cluster (4) - announcement master (6) - is configured to transmit advertising messages announcing the existence of said cluster (4) to potential scanning devices (5) that try to discover said cluster (4),
wherein said independent infrastructure serves as external synchronization source **in that** said announcement master (6) as well as potential scanning devices (5) are configured to apply predefined rules to derive from passively observed information contained in the beacon frames transmitted unencrypted by Wi-Fi access points (2) of said independent Wi-Fi infrastructure time slots of said advertising messages, which are used as common rendezvous points,
wherein the Timing Synchronization Function, TSF, that each Wi-Fi access point (2) embeds into its beacon frames is used as a time coordinate system for deriving the time slots of said advertising messages, and
wherein said mobile stations (3) are configured to alternate the role of said announcement master (6) among the mobile stations (3) of a synchronized cluster (4).

15. System according to claim 14, wherein said synchronized clusters (4) are synchronized Social Wi-Fi clusters (4).

## Patentansprüche

1. Verfahren zur Unterstützung der Erkennung synchronisierter Cluster (4) von Mobilstationen (3) in einem drahtlosen Kommunikationsnetzwerk (1),
wobei ein synchronisierter Cluster (4) eine Anzahl von Mobilstationen (3) umfasst, die periodisch gemäß einem gemeinsamen Arbeitszyklus aufwachen,
**dadurch gekennzeichnet, dass** mindestens eine Mobilstation (3) eines synchronisierten Clusters (4) - Bekanntgebungs-Master (6) - Anzeigenachrichten aussendet, die potentiellen scannenden Vorrichtungen (5), die versuchen, das Cluster (4) zu erkennen, das Vorhandensein des Clusters (4) bekanntgeben,
wobei eine unabhängige Wi-Fi-Infrastruktur mit einer Vielzahl von Wi-Fi-Zugangspunkten (2), die regelmäßig Beacon-Frames senden, welche die Mobilstationen (3) hören können, ohne mit den Wi-Fi-Zugangspunkten (2) verbunden zu sein, als externe Synchronisationsquelle verwendet wird, indem der Bekanntgebungs-Master (6) sowie potentielle scannende Vorrichtungen (5) vordefinierte Regeln anwenden, um von passiv wahrgenommenen Informationen, die in den Beacon-Frames enthalten sind, welche von Wi-Fi-Zugangspunkten (2) der unabhängigen Wi-Fi-Infrastruktur unverschlüsselt übertragen werden, Zeitfenster der Anzeigenachrichten abzuleiten, welche als gemeinsame Rendezvous-Punkte verwendet werden,
wobei die Timing-Synchronisationsfunktion, TSF, die jeder Wi-Fi-Zugangspunkt (2) in seine Beacon-Frames einbettet, als ein Zeitkoordinatensystem verwendet wird, um die Zeitfenster der Anzeigenachrichten abzuleiten, und
wobei die Rolle des Bekanntgebungs-Masters (6) zwischen den Mobilstationen (3) eines synchronisierten Clusters (4) abwechselt.

2. Verfahren nach Anspruch 1, wobei Mobilstationen (3) des drahtlosen Kommunikationsnetzwerks (1) mit Vorkenntnissen über die vordefinierten Regeln versehen werden.

3. Verfahren nach Anspruch 1 oder 2, wobei die Anzeigenachrichten periodisch auf Basis einer vordefinierten Anzeigen-Periode übertragen werden.

4. Verfahren nach einem der Ansprüche 1 bis 3, wobei der Bekanntgebungs-Master (6) periodisch nach dem Vorhandensein von umgebenden Wi-Fi-Zugangspunkten (2) der unabhängigen Wi-Fi-Infrastruktur scannt.

5. Verfahren nach einem der Ansprüche 1 bis 4, wobei der Bekanntgebungs-Master (6) einen oder mehrere seiner umgebenden Wi-Fi-Zugangspunkte (2) als seine Referenz-Wi-Fi-Zugangspunkte (7) auswählt.

6. Verfahren nach Anspruch 5, wobei die Anzeigenachrichten in demselben Kanal übertragen werden, in dem der Referenz-Wi-Fi-Zugangspunkt (7) arbeitet.

7. Verfahren nach einem der Ansprüche 1 bis 6, wobei die Zeitfenster der Anzeigenachrichten als Zeitpunkte abgeleitet werden, an denen eine vordefinierte Anzahl der niedrigeren Bits der TSF eines Referenz-Wi-Fi-Zugangspunkts (7) gleich einem vordefinierten, für den Wi-Fi-Referenz-Zugangspunkt (7) spezifischen Wert ist.

8. Verfahren nach Anspruch 7, wobei ein in seine Beacon-Frames eingebetteter Basic Service Set Identifier, BSSID, eines Referenz-Wi-Fi-Zugangspunkts (7) als der vordefinierte, für den Referenz-Wi-Fi-Zugangspunkt (7) spezifische Wert genutzt wird.

9. Verfahren nach Anspruch 7 oder 8, wobei die vordefinierte Anzahl der niedrigeren Bits der TSF eines Referenz-Wi-Fi-Zugangspunkts (7) an die Anzeigen-Periode angepasst ist.

10. Verfahren nach einem der Ansprüche 1 bis 9, wobei der Bekanntgebungs-Master (6) nur zu den für die Übertragung der Anzeigenachrichten festgelegten Zeitfenstern aufwacht und während der restlichen Zeit in einem Schlafmodus arbeitet.

11. Verfahren nach einem der Ansprüche 1 bis 10, wobei scannende Vorrichtungen (5) des drahtlosen Kommunikationsnetzwerks (1) zur Erkennung synchronisierter Cluster (4) von Mobilstationen (3) nach umgebenden Wi-Fi-Zugangspunkten (2) scannen.

12. Verfahren nach einem der Ansprüche 1 bis 11, wobei scannende Vorrichtungen (5) des drahtlosen Kommunikationsnetzwerks (1) für jeden entdeckten Wi-Fi-Zugangspunkt (2) mindestens die von dem WiFi- Zugangspunkt (2) angezeigte TSF, den Kanal, in dem der Wi-Fi-Zugangspunkt (2) arbeitet, und den BSSID des Wi-Fi-Zugangspunkts (2) speichern.

13. Verfahren nach einem der Ansprüche 1 bis 12, wobei scannende Vorrichtungen (5) des drahtlosen Kommunikationsnetzwerks (1) zu den zum Übertragen von Anzeigenachrichten spezifizierten Zeitfenstern aufwachen, welche sie aus Informationen ableiten, die in den Beacon-Frames enthalten sind, welche sie von einem Wi-Fi-Zugangspunkt (2) empfangen, und während der restlichen Zeit in einem Schlafmodus arbeiten.

14. System zur Unterstützung der Erkennung synchronisierter Cluster (4) von Mobilstationen (3) in einem drahtlosen Kommunikationsnetzwerk (1), umfassend
synchronisierte Cluster (4) mit einer Anzahl von Mobilstationen (3), die periodisch gemäß einem gemeinsamen Arbeitszyklus aufwachen, und
eine unabhängige WiFi-Infrastruktur mit einer Vielzahl von Wi-Fi-Zugangspunkten (2), die regelmäßig Beacon-Frames senden, welche die Mobilstationen (3) hören können, ohne mit den Wi-Fi-Zugangspunkten (2) verbunden zu sein,
**dadurch gekennzeichnet, dass** mindestens eine Mobilstation (3) eines synchronisierten Clusters (4) - Bekanntgebungs-Master (6) - konfiguriert ist, Anzeigenachrichten zu senden, welche potentiellen scannenden Vorrichtungen (5), die versuchen, den Cluster (4) zu erkennen, das Vorhandensein des Clusters (4) bekanntgeben,
wobei die unabhängige Infrastruktur als externe Synchronisationsquelle dient, indem der Bekanntgebungs-Master (6) sowie potentielle scannende Vorrichtungen (5) konfiguriert sind, vordefinierte Regeln anzuwenden, um von passiv wahrgenommenen Informationen, die in den Beacon-Frames enthalten sind, welche von Wi-Fi-Zugangspunkten (2) der unabhängigen Wi-Fi-Infrastruktur unverschlüsselt übertragen werden, Zeitfenster der Anzeigenachrichten abzuleiten, welche als gemeinsame Rendezvous-Punkte verwendet werden,
wobei die Timing-Synchronisationsfunktion, TSF, die jeder Wi-Fi-Zugangspunkt (2) in seine Beacon-Frames einbettet, als Zeitkoordinatensystem verwendet wird, um die Zeitfenster der Anzeigenachrichten abzuleiten, und
wobei die Mobilstationen (3) konfiguriert sind, die Rolle des Bekanntgebungs-Masters (6) unter den Mobilstationen (3) eines synchronisierten Clusters (4) zu wechseln.

15. System nach Anspruch 14, wobei die synchronisierten Cluster (4) synchronisierte soziale Wi-Fi-Cluster (4) sind.

## Revendications

1. Procédé de prise en charge de la découverte de grappes synchronisées (4) de stations mobiles (3) dans un réseau de communication sans fil (1),
dans lequel une grappe synchronisée (4) comporte un certain nombre de stations mobiles (3) qui se réveillent périodiquement selon un facteur d'utilisation commun,
**caractérisé en ce qu'**au moins une station mobile (3) d'une grappe synchronisée (4) - un maître d'annonce (6) - transmet des messages publicitaires annonçant l'existence de ladite grappe (4) à des dispositifs de balayage (5) potentiels qui tentent de découvrir ladite grappe (4),
dans lequel une structure Wi-Fi indépendante comportant une pluralité de points d'accès Wi-Fi (2) transmettant des trames de signalisation d'incidents sur une base régulière, lesquelles stations mobiles (3) sont capables d'entendre sans être connectées auxdits points d'accès Wi-Fi (2), est employée en tant que source de synchronisation externe dans ce dit maître d'annonce (6) ainsi que des dispositifs de balayage potentiels (5) appliquent des règles prédéfinies pour dériver à partir d'informations observées passivement contenues dans les trames de signalisation d'incidents transmises non chiffrées par des points d'accès Wi-Fi (2) de ladite structure Wi-Fi indépendante, des tranches de temps desdits messages publicitaires, qui sont utilisées en tant que points de rendez-vous communs,
dans lequel la fonction de synchronisation de temporisation, TSF, que chaque point d'accès Wi-Fi (2) intègre dans ses trames de signalisation d'incidents est utilisée en tant que système de coordonnées de temps pour dériver les tranches de temps desdits messages publicitaires, et
dans lequel le rôle dudit maître d'annonce (6) est alterné parmi les stations mobiles (3) d'une grappe synchronisée (4).

2. Procédé selon la revendication 1, dans lequel des stations mobiles (3) dudit réseau de communication sans fil (1) sont pourvues d'une connaissance a priori concernant lesdites règles prédéfinies.

3. Procédé selon la revendication 1 ou 2, dans lequel lesdits messages publicitaires sont transmis périodiquement sur la base d'une période de publicité prédéfinie.

4. Procédé selon l'une quelconque des revendications 1 à 3, dans lequel ledit maître d'annonce (6) effectue un balayage périodique à la recherche de la présence de points d'accès Wi-Fi (2) environnants de ladite structure Wi-Fi indépendante.

5. Procédé selon l'une quelconque des revendications 1 à 4, dans lequel ledit maître d'annonce (6) sélectionne un ou plusieurs de ses points d'accès Wi-Fi (2) environnants en tant que ses points d'accès Wi-Fi de référence (7).

6. Procédé selon la revendication 5, dans lequel lesdits messages publicitaires sont transmis dans le même canal où ledit point d'accès Wi-Fi de référence (7) fonctionne.

7. Procédé selon l'une quelconque des revendications 1 à 6, dans lequel les tranches de temps desdits messages publicitaires sont dérivées en tant que moments auxquels un nombre prédéfini des bits inférieurs d'une TSF du point d'accès Wi-Fi de référence (7) est égal à une valeur prédéfinie spécifique dudit point d'accès de référence Wi-Fi (7).

8. Procédé selon la revendication 7, dans lequel un identifiant d'ensemble de services de base, BSSID, du point d'accès Wi-Fi de référence (7) qui est intégré dans ses trames de signalisation d'incidents est utilisé en tant que dite valeur prédéfinie spécifique dudit point d'accès Wi-Fi de référence (7).

9. Procédé selon la revendication 7 ou 8, dans lequel ledit nombre prédéfini des bits inférieurs d'une TSF du point d'accès Wi-Fi de référence (7) est adapté à ladite période de publicité.

10. Procédé selon l'une quelconque des revendications 1 à 9, dans lequel ledit maître d'annonce (6) se réveille uniquement aux tranches de temps spécifiées pour transmettre lesdits messages publicitaires et fonctionne en mode veille pendant le reste du temps.

11. Procédé selon l'une quelconque des revendications 1 à 10, dans lequel des dispositifs de balayage (5) dudit réseau de communication sans fil (1), afin de découvrir des grappes synchronisées (4) de stations mobiles (3), effectuent un balayage à la recherche de points d'accès Wi-Fi (2) environnants.

12. Procédé selon l'une quelconque des revendications 1 à 11, dans lequel des dispositifs de balayage (5) dudit réseau de communication sans fil (1) stockent, pour chaque point d'accès Wi-Fi (2) découvert, au moins la TSF dont la publicité est faite par ledit point d'accès Wi-Fi (2), le canal où ledit point d'accès Wi-Fi (2) fonctionne, et ledit BSSID du point d'accès Wi-Fi (2).

13. Procédé selon l'une quelconque des revendications 1 à 12, dans lequel des dispositifs de balayage (5) dudit réseau de communication sans fil (1) se réveillent aux tranches de temps spécifiées pour transmettre des messages publicitaires, qu'ils dérivent à partir d'informations contenues dans les trames de signalisation d'incidents qu'ils reçoivent en provenance d'un point d'accès Wi-Fi (2), et fonctionnent en mode veille pendant le reste du temps.

14. Système de prise en charge de la découverte de grappes synchronisées (4) de stations mobiles (3) dans un réseau de communication sans fil (1), comprenant
des grappes synchronisées (4) comportant un certain nombre de stations mobiles (3) qui se réveillent périodiquement selon un facteur d'utilisation commun, et
une structure Wi-Fi indépendante comportant une pluralité de points d'accès Wi-Fi (2) transmettant des trames de signalisation d'incidents sur une base régulière, lesquelles stations mobiles (3) sont capables d'entendre sans être connectées auxdits points d'accès Wi-Fi (2),
**caractérisé en ce qu'**au moins une station mobile (3) d'une grappe synchronisée (4) - un maître d'annonce (6) - est configurée pour transmettre des messages publicitaires annonçant l'existence de ladite grappe (4) à des dispositifs de balayage (5) potentiels qui tentent de découvrir ladite grappe (4),
dans lequel ladite structure indépendante sert de source de synchronisation externe dans ce dit maître d'annonce (6) ainsi que des dispositifs de balayage (5) potentiels sont configurés pour appliquer des règles prédéfinies pour dériver d'informations observées passivement contenues dans les trames de signalisation d'incidents transmises non chiffrées par des points d'accès Wi-Fi (2) de ladite infrastructure Wi-Fi indépendante, des tranches de temps desdits messages publicitaires, qui sont utilisées en tant que points de rendez-vous communs,
dans lequel la fonction de synchronisation de temporisation, TSF, que chaque point d'accès Wi-Fi (2) intègre dans es trames de signalisation d'incidents est utilisée en tant que système de coordonnées de temps pour dériver les tranches de temps desdits messages publicitaires, et
dans lequel lesdites stations mobiles (3) sont configurées pour alterner le rôle dudit maître d'annonce (6) parmi les stations mobiles (3) d'une grappe synchronisée (4).

15. Système selon la revendication 14, dans lequel lesdites grappes synchronisées (4) sont des grappes Wi-Fi sociales synchronisées (4).
